# EUROPEAN PATENT APPLICATION

(11) **EP 4 822 640 A1**
(43) Date of publication of application: **14.10.2026**
(21) Application number: 25169844.5
(22) Date of filing: 10.04.2025
(51) Int. Cl.: G06T 7/00, G06T 7/579, G06V 10/46

(54) **METHOD AND SYSTEM FOR CHARACTERIZING OBJECTS IN A MATERIAL STREAM USING AN INDEXED REPOSITORY OF CONSOLIDATED OBJECT REPRESENTATIONS**

(71) Applicant: VITO NV, 2400 Mol (BE)
(72) Inventor: GEURTS, Roeland, 2400 Mol (BE)
(74) Representative: V.O.

(57) **Abstract**

The present invention relates to a method and system for characterizing objects in a material stream using an indexed repository of recurring object types. It involves providing an indexed repository that contains consolidated representations of recurring object types. Each consolidated representation is derived from sensor data collected from multiple instances of the same object type. Sensor data of at least one object instance in the material stream is acquired through one or more sensing modalities. The acquired sensor data is then compared to the stored consolidated representations in order to match the object instance with at least one of these representations. Once a match is established, the method performs a characterization of the object instance by referencing the matched consolidated representation. Finally, an output is generated reflecting the result of this characterization. The invention provides for an accurate characterization of object types within material streams, providing a comprehensive framework with an indexed repository of recurring object types. The invention also relates to building an indexed representation of recurring objects in a physical material stream.

## Description

### FIELD OF THE INVENTION

The invention relates to a method and system for characterizing objects in a material stream. The invention also relates to automated object characterization within material streams. Furthermore, the invention relates to methods and systems utilizing sensor data to identify, classify, and analyze recurring object types. It is applicable in sectors such as manufacturing, quality control, recycling, and logistics, where accurate and efficient identification and analysis of objects are important. Additionally, the invention extends to techniques for building indexable representations of recurring objects, incorporating multi-view data, and leveraging imaging modalities such as radiographic analysis for material discrimination. Additionally, the invention also relates to a method and system for building an indexed representation of recurring objects in a physical material stream.

### BACKGROUND TO THE INVENTION

In various sectors, accurate identification and characterization of diverse objects within dynamic material streams are important for enhancing operational efficiency, ensuring quality control, and/or optimizing resource management. Industries such as manufacturing, logistics, quality assurance, and recycling routinely face challenges associated with classifying and analyzing large volumes of heterogeneous objects in real-time. These tasks are further complicated by factors such as varying orientations, partial visibility, and inconsistent positioning of objects within material streams. As a result, there is a need for techniques capable of robustly identifying and representing objects from limited or incomplete sensor data, particularly in contexts demanding automated, high-throughput analysis and classification.

For instance, in the field of waste management and recycling, the efficient identification and classification of end-of-life products are important for optimizing material recovery processes. Modern waste streams, such as those containing electronic waste or used batteries, present significant challenges due to the sheer volume and diversity of objects passing through sorting facilities. Accurate identification of these objects can be important for effective recycling, compliance with environmental regulations, and for gaining insights into material flows within the waste stream.

Current methods for material stream analysis often rely on imaging technologies, such as RGB cameras and X-ray systems, to capture visual and structural information about the objects on conveyor belts. Traditional image processing and machine learning techniques are employed to classify objects based on single-view images. However, these approaches have limitations in handling occlusions, varying orientations, and incomplete views of objects, leading to suboptimal classification accuracy.

In the domain of X-ray imaging, reconstructing three-dimensional representations of objects typically involves computed tomography techniques. Conventional CT reconstruction methods, such as Filtered Back Projection (FBP) and Fourier-based algorithms, rely on densely sampled projection angles and precise knowledge of these angles around a single rotational axis. These methods assume a controlled environment where the object's position and orientation are typically known and systematically varied, conditions that are typically not feasible in dynamic waste stream settings.

When only a limited number of projection angles are available, or when the projection angles are unknown, a common scenario in material stream scanning, analytical reconstruction methods tend to fail or produce significant artefacts. Iterative reconstruction techniques, such as algebraic reconstruction, expectation maximization (EM), and total variation regularization (TVR), have been explored to address these limitations. While they offer improvements over analytical methods under sparse data conditions, they still require some knowledge of projection geometry and struggle with reconstruction quality when angles are entirely unknown or when data is exceedingly sparse.

Moreover, existing methods often assume that the projection angles are confined around a single rotational axis. This assumption does not hold in waste stream environments, where objects are transported by conveyor belts, presenting random orientations and positions to the scanning systems. As a result, the applicability of these reconstruction techniques is limited, and the three-dimensional structure of the objects remains inadequately captured.

Self-supervised learning models for natural images, such as contrastive learning frameworks and masked autoencoders, have shown promise in learning feature representations without labeled data. These models aim to capture semantic similarities between images and are robust to certain transformations and occlusions. However, applying these methods directly to waste stream analysis poses challenges due to the domain gap between natural images and X-ray or RGB images of waste objects.

Neural Radiance Fields (NeRF) have emerged as a technique for high-quality novel view synthesis and three-dimensional scene reconstruction from images. While NeRFs offer potential for reconstructing objects from image data, traditional NeRF models struggle with 360-degree views and require extensive, densely sampled input data from known viewpoints. In waste stream applications, where only a few images of an object from unknown angles may be available, NeRFs face significant limitations. Recent developments aim to address some of these constraints, but challenges remain in handling sparse data, unknown orientations, and the dynamic nature of waste streams.

Existing technologies do not adequately address the need for unsupervised learning methods that can operate continuously, handle unknown and arbitrary object orientations, and can handle material streams with objects having unknown variations and defects. These limitations hinder the ability to fully characterize and classify objects in waste streams, impeding efforts to optimize recycling processes, improve material recovery rates, and gain valuable insights into material flows.

Therefore, there is a strong desire for improved methodologies and systems that overcome these challenges by enabling robust, reconstruction and representation of objects in waste streams from sparse, multi-view data with unknown poses. Such advancements would facilitate more accurate object identification, support anomaly detection, and enhance the overall efficiency of waste management operations.

### SUMMARY OF THE INVENTION

It is an object of the invention to provide for a method and a system that obviates at least one of the above-mentioned drawbacks.

Additionally, or alternatively, it is an object of the invention to provide for an improved method and system for characterizing objects in a material stream by using an indexed repository of recurring object types.

Additionally, or alternatively, it is an object of the invention to provide robust methodologies and systems for accurately identifying and characterizing objects from sparse, multi-view sensor data under varying orientations and dynamic conditions.

Additionally, or alternatively, it is an object of the invention to improve operational efficiency and resource optimization in scanning of material streams.

Additionally, or alternatively, it is an object of the invention to improve the accuracy of object characterization in material stream scanning systems, such as waste/recycling management systems.

Thereto, the invention provides for a method for characterizing objects in a material stream by using an indexed repository of recurring object types, the method comprising: providing an indexed repository that stores consolidated representations of recurring object types, each consolidated representation having been derived from sensor data collected from multiple instances of an object type; acquiring sensor data of at least one object instance in the material stream, using one or more sensing modalities; matching said object instance to at least one consolidated representation within the indexed repository, based on a comparison of a representation of the acquired sensor data of said object instance to data associated with the stored consolidated representations; performing a characterization of the object instance by referencing the matched consolidated representation; and generating an output reflecting a result of the characterization.

The method can incrementally build a comprehensive dictionary of objects encountered within the material stream, enabling efficient identification and characterization of these objects as they appear. An indexed repository can be generated/provided that stores consolidated representations of recurring object types. Each consolidated representation can be derived from sensor data collected from multiple instances of a particular object type. The same objects often appear repeatedly in material streams, such as waste or production materials, each time exhibiting different orientations or conditions. By aggregating data from multiple instances, the repository builds a more complete representation of each object type, thereby enhancing said representation.

Sensor data is acquired from the material stream using one or more sensing modalities, such as imaging sensors like cameras and/or X-ray devices. The sensor data captures at least one object instance within the stream, reflecting its current appearance and orientation. The acquired sensor data can be processed to generate a representation of the object instance. This representation is compared to the data associated with the stored consolidated representations in the indexed repository. The comparison may involve employing one or more techniques to match the object instance to at least one consolidated representation based on similarities between their features. This matching process may identify whether the object instance corresponds to a recurring object type already captured in the repository.

Upon successful matching, the method may perform a characterization of the object instance by referencing the matched consolidated representation. This characterization may involve determining attributes such as the object's type, classification, or other relevant properties encapsulated within the consolidated representation. By referencing the comprehensive data stored in the repository, the method provides an accurate and detailed characterization of the object instance.

An output is then generated to reflect the result of the characterization. This output can be utilized for various purposes, such as real-time monitoring, sorting within the material stream, informing subsequent processing steps, etc. The output may thus for example be used for performing an operational and/or control action. The method effectively enhances operational efficiency by facilitating quick and reliable characterization of objects, which is particularly beneficial in industrial applications where timely decision-making can be important.

By continuously aggregating sensor data from multiple instances of recurring object types, the repository can evolve and become more robust over time. This incremental approach supports unsupervised lifelong learning, allowing the method to adapt to new variations and conditions without the need for manual intervention or labeling. The consolidation of different viewpoints and conditions into unified representations enriches the repository, improving the accuracy of future matching and characterization processes.

This method is particularly suited for material streams with recurring objects, such as end-of-life products, waste electrical and electronic equipment, or other recyclable materials. By providing a structured approach to indexing and characterizing these objects, the method contributes to improved material handling, better resource management, and enhanced sustainability efforts in industrial settings.

In some examples, the method compares a processed or extracted representation of the newly acquired sensor data against the stored consolidated representations, rather than making a direct, one-to-one comparison of the raw sensor data. This approach allows the system to reduce high-dimensional data into more compact, discriminative features that facilitate efficient and reliable matching. By focusing on extracted features or representations, such as key geometric structures, texture patterns, or learned embeddings, the method can improve its robustness to noise, sensor variations, and differences in object orientation or appearance.

In some examples, the method handles both continuous and discrete states of the object, acknowledging that certain objects can exhibit a range of conditions. For instance, slight wear or partial damage could be viewed as a continuous change in state, whereas a change in the object's functional category (e.g., a product variant) could represent a discrete shift. The consolidated representation can accommodate either scenario, facilitating nuanced classification and state tracking.

Optionally, the method further includes, upon determining that no match exists between the acquired sensor data of the object instance and any stored consolidated representation in the indexed repository, automatically creating a new entry in the indexed repository, wherein the new entry comprises a consolidated representation derived from the sensor data of the unmatched object instance. This effectively enables subsequent matching and characterization of future object instances of that type.

In some examples, the method can be fully adaptive to the range of objects encountered in the material stream. Specifically, when an object instance is scanned and its sensor data fails to match any existing consolidated representation stored in the indexed repository, the system can automatically initiates the creation of a new repository entry. This process involves deriving a new consolidated representation based on the sensor data collected from the unmatched object instance. By incorporating this new representation into the indexed repository, the system continuously expands and refines its database of object types. This dynamic updating mechanism not only ensures that every encountered object, even those previously unobserved, can be indexed and later characterized accurately, but it also enhances the system's overall ability to adapt to variations and evolving conditions within the material stream. As the repository grows with new entries, subsequent occurrences of similar objects can be more quickly and reliably matched. This can effectively improve the efficiency and robustness of the characterization process over time.

Optionally, the method further comprising reorganizing at least one consolidated representation into multiple branched sub-representations when newly acquired sensor data reveals that a previously unified object type encompasses multiple distinct sub-types or conditions. In this way, more granular classification and characterization of the object instance can be effectively obtained.

In certain embodiments, the indexed repository described herein can flexibly evolve from a single, unified representation of an object type to a set of finer-grained sub-representations. In particular, the system may initially form a single consolidated representation of an object type based on the earliest or sparsest sensor data, capturing general features common to multiple instances. As more diverse data accumulates, such as observations revealing subtle differences in wear, manufacturing tolerances, internal composition, and/or other variant attributes, it can become apparent that what was previously treated as a single category may actually comprise multiple sub-types or conditions. In response, the system can split the originally unified representation into multiple branches, each branch reflecting the distinct properties and behaviors of a particular subgroup.

By permitting such branching over time, the system naturally transitions from a flat, one-level classification scheme to a hierarchical structure in which each upper-level class (for example, "battery") can diverge into lower-level sub-classes (for instance, different chemistries, defect states, or degrees of wear). This branched arrangement is particularly advantageous because it enables more targeted comparisons during the matching step. When a newly observed object instance is compared with the repository, the matching process not only refers to the general, high-level category but can also traverse the branches most relevant to the object's particular features, thus improving both identification accuracy and defect detection.

The ability to reorganize consolidated representations in this manner is beneficial for applications in which object variability arises gradually. In one example, the repository may initially treat all power cells as a single category. As additional sensor data reveals meaningful variations (e.g., a certain subset exhibiting internal degradation or a unique electrode arrangement), the consolidated representation for battery can be divided into multiple child nodes, each capturing the nuanced differences specific to a subgroup. Subsequent objects that match one of these refined representations can thereby be characterized at a higher level of specificity, ultimately yielding better insights into material composition, likely performance, or potential failure modes.

Furthermore, this hierarchical or branched approach enhances anomaly detection because the system can compare each incoming object instance to a more precise reference model. If an instance deviates substantially from its presumed branch, the system can flag that discrepancy as a likely indication of a defect or unexpected variation. As new object instances are scanned and evaluated, the repository continuously adapts, adding new branches or refining existing ones when warranted by incoming data. This ensures that the classification and analysis process can remain responsive to real-world complexity, hence improving the robustness and scalability of the overall system.

Optionally, the method further comprises storing, in the indexed repository, the actual sensor data from each physical instance used to build or update the consolidated representation, such that real object data (including raw or partially processed sensor outputs) is preserved and accessible for subsequent post-hoc analysis and characterization.

Optionally, each consolidated representation comprises one or more references or pointers to an underlying multi-view and/or multi-modal sensor data of the corresponding object instances. This enables direct retrieval of exemplars for validation, deeper inspection, or further derived analyses beyond the initial characterization.

Optionally, the repository is configured to allow visualization, comparative review, or generative refinement of previously captured sensor data. This can ensure that the aggregate record for each object type remains a data-rich resource rather than an exclusively model-based or black-box abstraction.

Optionally, the characterization includes at least one of: determining an object type or classification, detecting anomalies or defects by comparing the object instance to the consolidated representation, or estimating geometrical and/or material characteristics.

By matching one or more representations of the acquired sensor data to a stored consolidated representation within the repository, an accurate identification and classification of the object instance can be obtained. This identification process can be important for appropriately categorizing objects for subsequent processing steps, enhancing the efficiency of material handling and sorting operations.

In addition to object classification, the method facilitates the detection of anomalies or defects in the object instance by comparing it to the corresponding consolidated representation. The consolidated representation, derived from sensor data collected from multiple instances of the object type, may embody the expected norms and standard characteristics of that object type. By assessing deviations between the sensor data of the current object instance and the consolidated representation, the method can identify discrepancies that indicate potential anomalies or defects. This comparison allows for the early detection of imperfections, damages, or inconsistencies that may affect the quality or integrity of the object. Detecting such anomalies can be important for quality control processes, as it ensures that defective or substandard objects are identified and handled appropriately, for instance preventing them from proceeding further along the processing line.

Moreover, the method includes the estimation of geometrical and material characteristics of the object instance by referencing the matched consolidated representation. The consolidated representation encapsulates comprehensive information about the geometrical features and material properties typical of the object type. By analyzing the acquired sensor data in conjunction with this stored information, the method can infer specific geometrical dimensions, shapes, and configurations of the object instance. Additionally, material characteristics such as composition, density, or other physical properties can be estimated based on the sensor data and the known attributes of the object type. This estimation provides valuable insights into the object's physical attributes, which are important for determining its suitability for various applications, recycling processes, and/or further manufacturing steps.

Optionally, each consolidated representation stored in the indexed repository includes a three-dimensional model of the corresponding object type, the three-dimensional model being generated from multi-view sensor data of multiple instances of said object type.

As the same types of objects recur within the material stream, they are captured multiple times by one or more sensing modalities, each time from a different viewpoint or orientation. This accumulation of diverse sensor data enables the construction of comprehensive 3D models that encapsulate the full spatial geometry and structural nuances of the object types.

The generation of these 3D models involves aggregating the sensor data from multiple instances to incrementally build a unified representation. By combining data from different viewpoints, the method can effectively synthesize a complete spatial representation of the object type, for instance creating a 360-degree view or the like. This approach leverages the inherent variability in object orientations within the material stream to gather complementary information that may not be observable from a single view. The method accommodates variations among different physical instances of the same object type, enabling the consolidated representation to capture common structural features while accounting for typical variations.

Incorporating such 3D models into the consolidated representations significantly enhances the depth and accuracy of object characterization. The detailed spatial information captured in the 3D models allows for better differentiation between similar objects by highlighting subtle differences in shape, features, or structure that may not be apparent in two-dimensional sensor data. Such comprehensive modeling improves the precision of matching during the characterization process, since acquired sensor data of an object instance can more effectively be compared with the detailed 3D models stored in the repository.

By utilizing readily available sensor data collected over time from recurring object instances, the capability to correctly identify and analyze objects in the material stream can be enhanced. This leads to improved performance in tasks such as classification, sorting, or inspection, contributing to more efficient processing of the material stream. The enriched consolidated representations facilitate more accurate matching and characterization, enabling the system to handle a wide variety of object types with greater reliability.

In some examples, the method may further involve applying three-dimensional reconstruction techniques to produce or refine the 3D models from sparse or partially overlapping two-dimensional images acquired under varying orientations of the object instances. Such reconstruction techniques can synthesize coherent 3D representations from incomplete data by leveraging the diversity of views obtained over time. The aggregated data from multiple instances and viewpoints enriches the 3D model, making it robust to variations and capable of capturing important characteristics of the object type. This incremental and data-driven approach to building the 3D models ensures that the consolidated representations remain up-to-date and reflective of the actual variations encountered in the material stream.

Optionally, the method further includes applying a three-dimensional reconstruction technique to produce or refine said three-dimensional model from sparse or partially overlapping two-dimensional images acquired under varying orientations of the object instances.

As objects traverse a material stream, sensors such as optical cameras or radiographic imaging devices capture images of these objects. Due to the random orientations and positions of objects within the stream, each object is imaged from different viewpoints, resulting in a collection of two-dimensional images that provide partial views of the object instances. The method involves aggregating these two-dimensional images to reconstruct a comprehensive three-dimensional model of each recurring object type. The reconstruction technique leverages the variations in orientation among the acquired images to extract complementary information about the object's geometry and features. By aligning and integrating the multiple partial views, the method synthesizes a unified three-dimensional representation that encapsulates the object's full structure.

The reconstruction process may utilize algorithms capable of handling sparse data sets and variable projection angles. Techniques such as iterative reconstruction algorithms, algebraic reconstruction methods, and/or (generative) deep learning-based approaches can be employed to infer the three-dimensional structure from the available two-dimensional projections. These techniques are capable of dealing with incomplete data and can accommodate the inconsistencies inherent in images captured from uncontrolled orientations.

By producing or refining the three-dimensional models from sparse or partially overlapping images, the method enhances the accuracy and completeness of the consolidated representations stored in the indexed repository. The refined models provide more detailed and robust object representations, which facilitate more precise matching and characterization of subsequent object instances encountered in the material stream. The three-dimensional models may reveal aspects of the objects that are not visible in any single two-dimensional image, such as hidden surfaces or internal components, offering a more thorough understanding of the object's properties.

In some examples, in applications involving single-energy, multi-energy or (hyper)spectral radiographic imaging, reconstructing three-dimensional volumes from sparse, possibly unknown X-ray projections enables the disentanglement of multi-material objects into their constituent components and materials. This capability is akin to performing (hyperspectral) computed tomography (CT) scanning without the need for comprehensive rotational imaging setups. By reconstructing the full three-dimensional volume from limited projection data, the method provides detailed volumetric information that enhances material characterization and identification.

In some examples, a single representation might split into multiple hierarchical branches once enough data suggests the presence of distinct object classes or conditions.

Optionally, the method further includes obtaining radiographic sensor data of the object instance from multiple unknown viewing angles within the material stream, and generating a three-dimensional volumetric reconstruction of at least part of the object instance by applying an iterative or learning-based technique configured to handle sparse and/or unknown projection angles.

The invention can leverage the fact that each object type may appear in many different orientations and positions in the material stream, allowing three-dimensional X-ray reconstructions to be achieved even when the corresponding projection angles are sparse or entirely unknown. In material streams, objects may traverse conveyors rather randomly, often overlapping or partially occluding one another. The invention turns this challenge into an advantage by continuously aggregating multiple accidental viewpoints of the same object type as it reappears in different scans and orientations, advantageously, without requiring additional camera stations or controlled multi-angle scanning hardware.

When X-ray transmission data is collected sporadically at varying (and initially unknown) viewing angles, the system's reconstruction module can employ iterative or learning-based techniques that can accommodate incomplete angle information. These methods infer the missing projection geometry based on repeated appearances of an object type in different poses, gradually converging on a coherent volumetric model. Because numerous instances of the same object type naturally pass along the stream, each instance contributes new viewpoints and partial observations; over time, the repository can fuse this scattered data into an increasingly detailed three-dimensional representation. By learning how the object's internal structure projects under many incidental orientations, the system avoids the need for a multi-angle hardware setup and/or a dedicated CT setup with known, densely sampled views.

A further benefit of this approach is that it supports hyperspectral or multi-energy X-ray imaging, which significantly enhances material discrimination and chemical characterization. As the consolidated model becomes more complete, per-voxel spectral attenuation information can be recovered, indicating the likely composition of different regions within each object. This detailed spectral information can be for example valuable for composite materials, as it allows more accurate differentiation of constituent components or detection of contaminants that would otherwise remain indistinguishable in conventional single-energy X-ray images. Thus, even with sparse and random orientations, the invention provides a practical route to high-fidelity volumetric and (hyper)spectral reconstructions.

Optionally, the sensor data comprises spectral X-ray transmission images acquired from a plurality of angular viewpoints, and the method further comprises combining said images to form a three-dimensional volumetric reconstruction of the object, wherein said volumetric reconstruction is employed to determine one or more spectral fingerprints from individual components and/or materials within the object. Advantageously, a precise, quantitative determination of chemical composition can be obtained, improving material discrimination and/or defect detection.

In some examples, spectral X-ray imaging is integrated to significantly enhance 3D reconstruction and material analysis. For example, unlike approaches that predominantly emphasize RGB imaging, in such example, spectral X-ray transmission images from multiple viewpoints can be acquired. These diverse angular measurements can be combined to construct a comprehensive three-dimensional representation of the object, overcoming the inherent limitations of single-perspective X-ray imaging. This volumetric reconstruction not only reveals subtle internal structures but also enables the extraction of spectral fingerprints from individual components and materials within the object. The multi-view synthesis of X-ray data facilitates a precise, quantitative determination of properties (e.g. chemical composition), as variations in material-specific X-ray attenuation can be detected and analyzed. This capability allows for much more accurate material discrimination and/or defect detection compared to traditional imaging methods. This can significantly improve quality control and efficiency in applications such as recycling and manufacturing, for instance.

Optionally, the method includes incrementally updating at least one consolidated representation in the indexed repository, by incorporating newly acquired sensor data from subsequent object instances identified as the same object type during analyzing of objects in the material stream.

As the system continuously scans the material stream, it encounters multiple instances of recurring object types, each presenting variations in orientation, condition, or appearance due to the stochastic nature of the stream. By assimilating this new sensor data into existing consolidated representations, the repository evolves to reflect the most current and comprehensive information available for each object type. This dynamic updating process allows the system to adapt to changes in object types or variations that may emerge over time, such as manufacturing differences, wear, or damage. The incremental refinement of consolidated representations enhances the accuracy of the matching process, as the system leverages a more robust and representative dataset for each object type.

The system can autonomously enrich its knowledge base as more data is collected, reducing operational overhead and minimizing human intervention. This continuous learning capability ensures that the system remains effective over the long term, even as the characteristics of the material stream evolve, providing a highly adaptive method.

Furthermore, the method enables the detection of new patterns or subtle variations within object types that may not have been apparent initially. By continuously updating the consolidated representations, the system can identify and adapt to these nuances, improving the granularity of classification and facilitating more precise downstream processes. The ability to maintain up-to-date and detailed representations contributes significantly to the overall efficiency and effectiveness of object characterization within the material stream.

Optionally, the matching of the object instance to at least one consolidated representation comprises computing a similarity measure in a learned embedding space, said embedding space being generated via a machine learning model trained on the sensor data.

The machine learning model may transform the complex, high-dimensional sensor data into a lower-dimensional embedding space where the salient features for object discrimination are emphasized. In this space, similar objects may be positioned in close proximity, while dissimilar objects are located farther apart. By projecting both the newly acquired object instance and the stored consolidated representations into this embedding space, the system can compute a similarity measure, such as a distance metric, between them.

This approach enhances the efficiency and accuracy of the matching process. The learned embedding space effectively reduces the dimensionality of the data while preserving the important characteristics needed to distinguish between different object types. As a result, the computation of similarity measures becomes more efficient, allowing the system to handle large volumes of data with reduced computational overhead. Furthermore, since the embedding space is tailored to the specific features present in the sensor data of the material stream, the matching process becomes more accurate, improving the ability to correctly identify and classify object instances.

The use of a similarity measure in the learned embedding space facilitates rapid comparisons between object instances and consolidated representations. By focusing on the most relevant features for discrimination, the system can more effectively differentiate between objects that may appear similar in raw sensor data but have distinct characteristics in the embedding space. This leads to improved matching accuracy, which can be important in applications where precise identification of objects is necessary.

In some examples, different strategies can be deployed to establish or refine the matching thresholds and processes. For instance, an algorithm may use a configurable similarity radius when measuring distances between embeddings, and/or a human operator may occasionally provide ground truth matches to calibrate the system. Automated approaches are also possible: re-scanning the same object under different orientations can generate validated matching pairs, which can then be fed back into the algorithm to improve its accuracy and robustness.

Optionally, detecting anomalies or defects further comprises: simulating a predicted sensor response of the matched consolidated representation from the same viewpoint as newly acquired sensor data, and comparing the predicted sensor response to the actual sensor data to identify differences above a threshold, said differences indicating an anomaly or defect.

The consolidated representation, derived from prior sensor data of multiple instances of the same object type, serves as an ideal or reference model. By generating a predicted sensor response from the same viewpoint as the newly acquired sensor data, the method creates a basis for direct comparison. The simulation takes into account the specific orientation and position of the object instance as captured by the sensors, ensuring that the predicted response accurately reflects how the ideal object should appear under identical conditions.

Once the predicted sensor response is obtained, it is compared to the actual sensor data acquired from the object instance in the material stream. This comparison is conducted to identify any differences that exceed a predefined threshold. Such differences are indicative of discrepancies between the ideal model and the actual object, highlighting potential anomalies or defects. The threshold is set to distinguish between acceptable variations and significant deviations that deserve attention.

This approach allows for precise identification of anomalies or defects that may not be immediately apparent through conventional inspection methods. By focusing on deviations from the ideal consolidated representation, the method can detect subtle defects that may otherwise go unnoticed. The ability to simulate and compare at such a granular level enhances sensitivity and specificity in defect detection.

By systematically identifying and addressing defects, the method reduces the risk of defective items proceeding through the material stream. This leads to increased efficiency in the processing system and ensures that only items meeting the required specifications are allowed to continue. The process is i.a. effective in environments where objects of the same type frequently recur, enabling the system to continuously refine the consolidated representations and improve detection accuracy over time.

This not only enhances productivity but also ensures a consistent level of quality assurance throughout the operational process.

Optionally, the method further includes extracting textual or graphical information appearing on the surface of the object instance, and incorporating said textual or graphical information into the consolidated representation for subsequent recognition and/or classification tasks.

Such textual or graphical information may include labels, logos, serial numbers, barcodes, or any other markings present on the object's surface. By capturing and integrating such surface information, the system enriches the consolidated representations with semantic details that enhance its ability to distinguish between objects that may be visually similar but differ in function, composition, or other important attributes. This can provide an additional layer/detail of characterization.

For example, in the context of processing a stream of end-of-life batteries, important information regarding battery type, chemistry, manufacturer, or model is often printed on the exterior surface. Extracting this textual data allows the system to more accurately determine the specific battery chemistry or classification, which can be important e.g. for proper sorting, recycling processes, or compliance with environmental regulations. This is particularly advantageous when physical appearances alone are insufficient to differentiate between batteries that look alike but e.g. contain different internal compositions.

The extraction of textual information is facilitated by acquiring images of the object instances using RGB cameras or other suitable optical sensors. By collecting images from multiple viewpoints, achieved as the same object type appears repeatedly in different orientations within the material stream, the system can capture text or graphics located on various sides of the object. This multi-view approach ensures that even text or markings not visible from a single viewpoint are eventually captured and incorporated into the consolidated representation.

Incorporating textual and graphical information into the consolidated representations thus enhances the accuracy of object classification by adding another layer of distinctive features that can be used to differentiate objects. Labels, logos, and serial numbers often carry specific information about the object's make, model, or intended use, which is invaluable for precise identification. This is especially important in applications where objects can be sorted based on specific criteria or where certain items require special handling due to regulatory compliance.

Optionally, the object instance is a battery, and the step of performing the analysis includes determining a battery type or battery chemistry by referencing the matched consolidated representation that encodes characteristic optical, spectral, radiographic, and/or textual features indicative of battery composition.

Each battery instance can be captured in varying orientations and positions, allowing the collection of diverse viewpoints that contribute to a more complete understanding of the object characteristics. The method may involve matching one or more representations of the acquired sensor data of a battery instance to a consolidated representation stored within an indexed repository. The consolidated representation encapsulates the distinguishing features of that battery type, including optical signatures from RGB images, spectral properties indicative of material composition, radiographic profiles from X-ray transmissions, and textual information present on the battery surface. By referencing this enriched representation, the system performs a detailed analysis to accurately identify the battery's type and chemical composition.

Optical imaging allows the capture of visual features such as shape, color, and surface markings. By combining images from multiple perspectives, the system constructs a comprehensive visual model of the battery. This multi-view approach enhances the ability to recognize specific battery designs and types, even when individual instances exhibit variations in orientation or surface condition. Radiographic data obtained through X-ray imaging may, additionally or alternatively, provide insights into the internal structure of the battery, enabling the detection of constituent materials and internal configurations that are characteristic of particular chemistries, such as lithium-ion, nickel-metal hydride, nickel-cadmium, lead-acid or alkaline compositions and their subtypes.

Textual recognition plays an important role in identifying battery specifications that are often printed on the casing. By analyzing high-resolution images of the battery surface, the system may extract textual information including labels, model numbers, and chemical symbols. This textual data is integrated into the consolidated representation, reinforcing the accuracy of the battery identification process.

Additionally, or alternatively, spectral analysis further augments the characterization by detecting specific wavelengths absorbed or emitted by the battery materials, providing additional indications of the chemical constituents present.

The integration of diverse sensing modalities can result in a robust feature set that enhances the discrimination between different battery types and chemistries. For example, the method's ability to process and fuse data from optical, spectral, radiographic, and textual sources enables it to overcome the limitations of relying on a single sensing modality. This multimodal approach ensures that even in cases where certain features are obscured or degraded, such as worn labels or external damage, the system can still perform accurate identification based on the remaining available data.

By constructing and referencing the consolidated representations, the system contributes to efficient and reliable battery characterization within material streams. This capability can be important for applications involving proper handling, recycling, and disposal of batteries, where different chemistries require specific processing protocols to ensure safety and environmental compliance and to increase processing efficiency. Accurate identification of battery types facilitates appropriate sorting and treatment, reducing the risk of hazardous incidents and contributing to sustainability efforts by promoting the effective recycling of valuable materials.

Furthermore, the method supports continuous learning and improvement through the incremental updating of the indexed repository. As more battery instances are processed, the consolidated representations become increasingly refined, capturing a broader range of variations and enhancing the system's overall accuracy and robustness. This adaptive feature allows the method to remain effective in dynamic environments where new battery types may emerge, or existing types may exhibit changes over time.

Optionally, the method includes generating an unfolded or unwrapped representation of a cylindrical or otherwise curved surface of the object instance, wherein said unwrapped representation is stored in association with and/or can be derived from the consolidated representation in the indexed repository for recognition or inspection.

This unwrapping process may involve transforming the curved surface data obtained from the sensor modalities into a flat, two-dimensional representation. By doing so, the method allows for the comprehensive capture and analysis of surface features that would otherwise be obscured or fragmented due to the object's shape (cf. curvature).

The unwrapped representation can be created by mapping the sensor data from multiple viewpoints around the object onto a planar surface. This mapping takes into account the geometry of the object to accurately represent identifying characteristics that are distributed along the curved surface and/or within the object. Techniques such as cylindrical projection or conformal mapping can be employed to achieve this transformation while preserving the spatial relationships of surface features.

Storing the unwrapped representation in association with the consolidated representation within the indexed repository may further enhance the system's ability to recognize and inspect recurring object types. The unwrapped image provides a complete view of the object's surface, facilitating improved pattern recognition and classification tasks.

This approach is for example also advantageous for objects like cylindrical batteries where important information may be present in the wrapped layer of material. By unwrapping the internal surface, the method enables the extraction of important details such as its material properties that are important for proper characterization, identification, classification, etc. of the object within the material stream.

Moreover, the unwrapped representation improves inspection capabilities by allowing the detection of surface defects, wear, or damage that may not be visible from a single viewpoint. Defects such as dents, or (material) inconsistencies can be more readily identified when the entire surface is available for examination in a flat format. This comprehensive view supports quality control processes and enhances the detection of anomalies that can affect downstream processing such as e.g. recycling efforts.

An enhanced ability to perform thorough recognition and inspection tasks on objects with complex geometries can be obtained. It mitigates limitations associated with curved surfaces in conventional imaging by providing a complete and undistorted view of the object's internals. Consequently, the method improves detection rates of relevant features and reduces errors in object characterization, increasing the overall efficiency and reliability of the system in handling material streams containing such objects.

Optionally, the method includes incorporating multi-view data acquired of the same instance by at least two sensors oriented at different angles or positions relative to the material stream.

By capturing multiple perspectives of the same object in a same instance, occlusions and blind spots that may occur with a single viewpoint can be reduced, providing a more whole representation of the object. Features that are obscured or not visible from one angle may be clearly discernible from another, enabling the system to capture additional details that contribute to more accurate object characterization. The integration of data from multiple perspectives improves the reliability of object recognition by enriching the feature set associated with each object instance. This multi-view acquisition facilitates the construction of a unified representation by combining different viewpoints, leading to the generation of three-dimensional models or more comprehensive feature representations. By enhancing the data completeness through multi-view sensing, the system can more effectively match object instances to consolidated representations in the indexed repository.

The multi-view strategy can enhance the completeness of each consolidated representation and creates more robust similarity measures in the embedding space. By capturing different perspectives, the system is better able to handle occlusions, partial views, and overlapping objects in a crowded material stream. Capturing the multi-view data by sensor of the same type can generate ground truth data (i.e. no human effort needed) for training similarity metrics that can be used for instance matching.

Optionally, the three-dimensional model of the matched consolidated representation includes voxel-level radiographic data comprising analyzing per-voxel X-ray absorption characteristics to characterize, identify and/or discriminate among multiple constituent materials within the object instance.

By integrating this voxel-level information, the method enables an in-depth analysis of the internal structure of the object instance. During the acquisition phase, sensor data comprising X-ray images of the object instances are collected as they move through the material stream, with each instance being captured from varying orientations. These images are processed and combined to construct a comprehensive three-dimensional model that reflects the internal composition of the object at the voxel level. Each voxel within this model represents a discrete volume element containing data on the X-ray absorption properties at that specific location.

The per-voxel analysis involves examining the X-ray absorption values to detect variations that correspond to different materials. Since different materials exhibit distinct X-ray attenuation spectra, the absorption characteristics at each voxel can indicate the type of material present. This granular analysis allows for the identification of regions composed of different materials within the same object instance. Such capability can be important for objects that are composed of multiple materials or have complex internal assemblies, as it provides insights that are not accessible through 2D projective radiography and/or surface examination alone.

By discriminating among multiple constituent materials, the method facilitates the detection of internal defects, such as voids, cracks, or inclusions, which may compromise the integrity or performance of the object. It also enables the verification of material composition against expected specifications, which can be important in quality assessment processes. For instance, in the recycling industry, accurately identifying the material composition of waste objects can significantly enhance the efficiency of sorting and processing operations.

Unlike conventional CT scanning, which can be labor-intensive and require specialized equipment, the method can, advantageously, leverage the routine scanning process to achieve similar results without additional work.

Optionally, the output is used to control a material handling mechanism, wherein said mechanism includes at least one of: a robotic sorter configured to separate objects by object type, a diverter configured to remove defective or anomalous objects, or a conveyor system adapted to route objects to different downstream processes.

Optionally, the comparison of a representation of the acquired sensor data to the stored consolidated representations utilizes a probabilistic model that accounts for permissible variations within the same object type, including wear, damage, label degradation, and/or manufacturing tolerances.

Optionally, the characterization includes determining state-of-health or condition of the object instance, the analysis being facilitated by referencing historical data of previously scanned instances of the same object type to detect deviations indicative of reduced performance or structural defects.

Optionally, a transport mechanism is provided that is configured to vary the orientation of objects passing through the material stream, so as to increase the diversity of viewpoints captured by the sensor for each object type.

Optionally, the material stream is a manufacturing or assembly line, and the system is further configured to perform quality control by comparing incoming objects with idealized representations stored in the indexed dictionary to detect assembly errors, missing components, or defects.

Optionally, the method further comprises configuring the indexed repository to record and analyze the occurrence frequency of each recurring object type over time, wherein the repository tracks both short-term and long-term trends. This may for instance include identification of predominant object types, detection of rare occurrences, and quantification of significant increases or decreases in object frequencies, to provide relevant insights into the dynamic composition of the material stream.

In some examples, the indexed repository is enhanced to serve as a monitoring tool for the composition of the material stream by continuously recording the frequency with which each recurring object type appears. This dynamic tracking mechanism enables the system to observe both short-term fluctuations and long-term trends in the material stream. In practical terms, the repository may not only identify which object types, such as specific models of end-of-life batteries, occur most frequently but also highlights rare object occurrences and determines significant changes, either increases or decreases, in their prevalence. This capability to quantify and analyze trends over time can be important for operators as it provides actionable insights into the evolving composition of the material stream, improving decision-making for process optimization, resource allocation, and quality control.

Optionally, the method further comprises receiving an input image of an object; performing a reverse image search by comparing the input image to the consolidated representations stored in the indexed repository; and generating statistical information based thereon. For example, the statistical information may be indicative of the frequency of occurrence, temporal trends, and/or other ad-hoc analytics of the object based on the matched consolidated representation and associated data.

In some examples, the indexed repository is not solely limited to the automated characterization of objects in a material stream but is also configured to support reverse image search functionality. In this embodiment, an image depicting an object, such as a battery (or any other object), can be directly input to the system. The system then searches the repository to identify the corresponding consolidated representation derived from historical sensor data. Upon finding a match, detailed statistical information can be generated that reflects how frequently the object appears, its occurrence trends over time can be tracked, and/or other ad-hoc analytical tasks can be supported. Advantageously, such reverse image search capability enriches the overall functionality by providing decision-makers and operators with valuable insights into the operational dynamics, facilitating predictive maintenance, process optimization, and improved resource management based on the comprehensive dataset of object representations.

According to an aspect, the invention provides for a system for characterizing objects in a material stream by using an indexed repository of recurring object types, the system comprising at least one processor, a memory operatively coupled to the at least one processor, and program instructions stored in the memory which, when executed by the at least one processor, cause the system to: provide an indexed repository that stores consolidated representations of recurring object types, each consolidated representation having been derived from sensor data collected from multiple instances of an object type; acquire sensor data of at least one object instance in the material stream, using one or more sensing modalities; match said object instance to at least one consolidated representation within the indexed repository, based on a comparison of a representation of the acquired sensor data of said object to data associated with the stored consolidated representations; perform a characterization of the object instance by referencing the matched consolidated representation; and generate an output reflecting a result of the characterization.

Optionally, the repository does not merely store a static feature vector or model parameters derived from a one-time training dataset. Instead, it accumulates and fuses sensor data from multiple, distinct physical instances of the same object type over time. Each time the same object type reappears in the material stream, often in varying orientations or partial visibility, its newly acquired sensor data (e.g., RGB images, X-ray projections, spectral measurements) is integrated into a unified consolidated representation. This incremental, instance-by-instance consolidation enables a more comprehensive model that captures increasingly more detail of the object type and also the real-world variability of each object type, including subtle manufacturing differences, wear patterns, and occlusion artifacts. Traditional AI systems typically do not maintain such a dynamic, instance-driven update process.

The system first provides an indexed repository that stores consolidated representations of recurring object types. Each consolidated representation is derived from sensor data collected from multiple instances of a particular object type. This approach leverages the repetitive nature of objects within certain material streams, allowing the repository to encapsulate comprehensive information about each object type based on varied instances and observations.

To acquire data, the system utilizes one or more sensing modalities to capture sensor data of object instances present in the material stream. These sensing modalities may include optical sensors, cameras, or other suitable devices capable of collecting relevant data as objects traverse the material stream. The sensor data encompasses various features of the objects, which are important for accurate characterization.

Upon acquiring the sensor data of an object instance, the system proceeds to match this instance to at least one consolidated representation within the indexed repository. This matching process involves a comparison between a representation of the newly acquired sensor data and the data associated with the stored consolidated representations. The system employs processing techniques to extract salient features from the sensor data and determine similarity measures, facilitating accurate and efficient matching even within large datasets.

After establishing a match, the system performs an analysis of the object instance by referencing the matched consolidated representation. This analysis leverages the rich information contained within the consolidated representation, enabling the system to characterize the object effectively. The characterization may involve identifying specific attributes, properties, or classifications pertinent to the object type.

Finally, the system generates an output that reflects the result of the analysis. This output provides valuable information derived from the characterization process, which may include the identified object type, its classification, or other relevant details. The output can be utilized for various downstream processes, such as sorting, quality control, or further data analysis.

By integrating data acquisition, processing, matching, and analysis within a unified system architecture, the system facilitates efficient real-time operations in object characterization. This leads to increased throughput and consistency in characterizing objects within the material stream.

The scalable architecture allows the system to handle large volumes of data and (continuously) adapt to various material streams with different object types. By maintaining an indexed repository of consolidated representations, the system ensures efficient retrieval and matching, even as the diversity and quantity of objects increase.

Optionally, the at least one sensor comprises both an optical camera and an X-ray sensor, and wherein the unified representation includes at least: a three-dimensional (3D) volumetric reconstruction derived from the X-ray data, and a texture or surface model derived from the optical image data, such that the resulting representation captures both external surface features and internal structure or material composition information of the object type.

Optionally, the method further comprises incrementally refining the learned model and the unified representation for each object type as new object instances are observed, so as to perform an adaptive learning process in which the dictionary is continuously updated without requiring manual labeling.

Optionally, the method further comprises comparing newly acquired sensor data for an object instance with a predicted sensor projection of its corresponding unified representation at a matching viewing angle, and detecting anomalies in the newly acquired object instance based on deviations from the predicted projection, wherein anomalies indicate potential defects, damage, or unexpected modifications of the object.

Optionally, the unified representation is processed to provide a visual representation that allows rotation of the object type. In some examples, the generated unified representation includes producing an unfolded or unrolled surface image of a cylindrical or otherwise non-planar object, so as to enable a comprehensive visualization of markings or labels on the entire object surface in a single 2D view.

Optionally, the step of generating a unified representation comprises applying a deep generative modeling technique that infers or estimates object viewing angles to reconstruct 3D volume data from sparse or randomly oriented sensor observations.

Optionally, determining feature embeddings comprises employing a contrastive learning framework that treats different views of the same object instance as positive pairs and different object types as negative pairs, ensuring consistent feature representations across diverse viewpoints.

Optionally, a reconstruction module is provided that employs algebraic, iterative, or generative techniques to handle sparse X-ray projection angles, enabling partial or complete 3D reconstructions of multiple overlapping objects simultaneously present in the captured data.

Optionally, the reconstruction module is configured to analyze the reconstructed volumetric data to determine approximate material composition of the object type by correlating X-ray attenuation values within the 3D representation with known material properties.

Optionally, the method further includes one or more secondary sensors or readers configured to detect embedded identifiers (such as RFID identifiers), wherein the data processing module utilizes said identifiers to facilitate or confirm object type clustering and indexing.

According to an aspect, the invention provides for a method of building an indexed representation of recurring objects in a physical material stream, the method comprising: acquiring sensor data from a stream containing multiple object instances, said sensor data being obtained by one or more sensing modalities; identifying object instances in the acquired sensor data, each object instance corresponding to a distinct physical object; generating feature representations of the identified object instances through a learning process configured to produce similar feature representations for repeated appearances of the same object; grouping or clustering the object instances that share sufficiently similar feature representations, in order to recognize a recurring object type; forming a consolidated representation of each recurring object type by combining or otherwise fusing the sensor data from the grouped object instances; and storing the consolidated representation in an indexed repository to enable retrieval, comparison, and/or further analysis of subsequently observed object instances.

The repository's incremental, instance-by-instance consolidation does far more than store a single, one-off model or feature vector. It continuously aggregates and fuses diverse sensor inputs from multiple physical instances of each object type, better capturing the complexity of real-world applications. The ongoing assimilation of new data renders the method more adaptable and comprehensive.

Sensor data from a stream containing multiple object instances is acquired, where the sensor data is obtained by one or more sensing modalities that may include optical cameras capturing RGB images, X-ray imaging systems, or any other suitable sensors capable of obtaining information about the objects within the stream.

Each object instance in the acquired sensor data is identified, with each object instance corresponding to a distinct physical object in the material stream. This identification process may involve segmenting the sensor data to isolate individual objects, even when the objects appear in varying orientations or positions due to the nature of the stream's movement.

Feature representations of the identified object instances are generated through a learning process configured to produce similar feature representations for repeated appearances of the same object. This learning process utilizes machine learning techniques, such as self-supervised or unsupervised learning algorithms, to embed the object instances into a meaningful feature space. By doing so, the system ensures that different views or instances of the same object are represented similarly within this feature space, despite variations in appearance caused by different viewing angles, lighting conditions, and/or minor physical variations.

The method includes grouping or clustering the object instances that share sufficiently similar feature representations. This grouping is based on similarity measures within the feature space, allowing the system to recognize recurring object types within the material stream. Clustering techniques may involve calculating distance metrics or using algorithms that identify dense regions in the feature space where instances of the same object type are naturally grouped together.

For each recognized recurring object type, a consolidated representation is formed by combining or otherwise fusing the sensor data from the grouped object instances. This fusion process integrates complementary information from different instances and viewpoints of the same object, creating a unified representation that encompasses the various aspects observed in the stream. For example, combining different viewpoints captured over time can result in e.g. a comprehensive 360-degree view of the object, capturing details that may not be visible from a single perspective.

The consolidated representations are stored in an indexed repository, which serves as a comprehensive dictionary of the recurring objects identified in the material stream. This repository enables efficient retrieval, comparison, and further analysis of subsequently observed object instances. By indexing the consolidated representations, the system can quickly match new observations with existing object types, facilitating tasks such as classification, tracking, or anomaly detection.

This method establishes an effective framework for handling large volumes of diverse objects within a material stream. By building an indexed repository that captures the full range of appearances of recurring objects, the system supports more accurate retrieval and analysis of observed object instances. It enables downstream tasks that rely on detailed object representations, such as determining material composition, identifying product variants, or assessing the condition of objects within the stream.

Overall, the method provides a scalable and efficient solution for constructing a comprehensive repository of objects in a material stream. By combining sensing technologies with machine learning-based feature representation and clustering techniques, it addresses the challenges of in-depth characterizing, recognizing and indexing objects that appear repeatedly but variably within dynamic physical environments.

According to an aspect, the invention provides for a non-transitory computer-readable medium storing computer-executable instructions that, when executed by one or more processors, cause the one or more processors to perform the methods of the disclosure.

According to an aspect, the invention provides for a method for analyzing items within a data stream utilizing a reference database (e.g. indexed repository) of object categories, the method comprising providing a reference database containing representations of object categories, wherein each representation is formed from aggregated data originating from multiple occurrences of respective objects; collecting data from at least one item within the data stream using at least one sensing modality; comparing the collected data to one or more stored representations within the reference database to identify at least one corresponding object category; determining attributes of the item by referencing the identified object category; and generating an output indicative of the determined attributes.

It will be appreciated that any of the aspects, features and options described in view of the method for characterizing objects in a material stream apply equally to the systems and the described method of building an indexed representation of recurring objects in a physical material stream. It will also be clear that any one or more of the above aspects, features and options can be combined.

### BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:
Fig. 1 shows a schematic diagram of an exemplary method;
Fig. 2 shows a schematic diagram of an embodiment of an exemplary system;
Fig. 3 shows a schematic diagram of an embodiment of an exemplary system; and
Fig. 4 shows a schematic diagram of an exemplary method.

### DETAILED DESCRIPTION

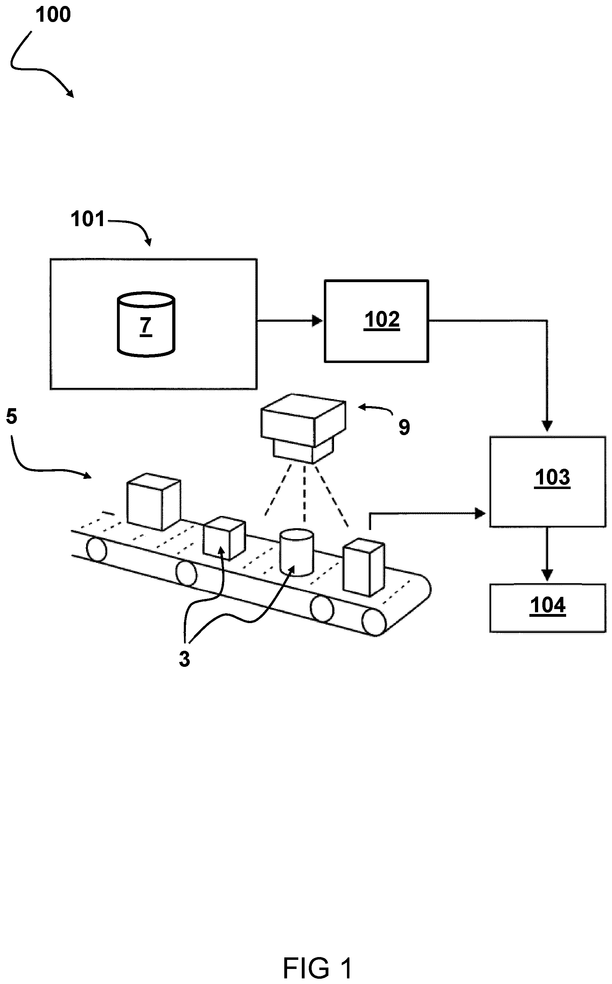

Fig. 1 shows a schematic diagram of a method 1 for characterizing objects 3 in a material stream 5 by using an indexed repository 7 of recurring object types. In a first step 101, access to the indexed repository 7 that stores consolidated representations of recurring object types is provided, each consolidated representation having been derived from sensor data collected from multiple instances of an object type. A sensing modality 9 is employed to acquire sensor data of at least one object instance in the material stream 5. In a second step 102, the object instance is matched to at least one consolidated representation within the indexed repository 7, based on a comparison of a representation of the acquired sensor data of said instance to data associated with the stored consolidated representations in the indexed repository 7. In a third step 103, an analysis/characterization of the object instance is performed by referencing the matched consolidated representation. In a fourth step 104, an output is generated reflecting a result of the characterization.

The method can be fully adaptive. When an object's sensor data doesn't match any existing entry, the system can automatically create a new one by generating a consolidated representation from the data. This dynamic update continuously expands the repository, ensuring even novel objects are accurately indexed and improving matching efficiency and robustness over time.

In some examples, the repository 7 can retain and organize the actual sensor data that gave rise to each consolidated representation. Concretely, when a certain object type (e.g., a specific battery model or a particular mechanical part) is observed multiple times under different orientations, lighting conditions, or X-ray angles, etc., the repository does not merely learn hidden parameters or embeddings and discard the source data. Rather, it stores the relevant sensor captures, partial 3D reconstructions, unwrapped surface images, text extractions, radiographic slices, and any other multi-view or any other multi-modal details associated with each recurring object type.

Because of this data-rich design, the repository 7 becomes a reference library of real object appearances and structures, complete with authentic examples that can be inspected, visualized, or used for post-hoc analyses. Users or operators can, for instance, retrieve previously aggregated data of a certain battery type to confirm the presence of a specific defect, verify labeling, or delve into the 3D geometry that was reconstructed over multiple scanning events. This approach thus departs from "black box" AI models, where only abstract network weights or compressed feature vectors remain accessible. Instead, the invention's repository explicitly preserves the underlying sensor-derived evidence in a structured manner, that can be continuously updated. As a consequence, the amount of information that has to be stored in the repository can grow large in an effective way. It will be appreciated that different strategies for data-efficient representations (i.e. compression) may be applied.

Moreover, this architecture permits more granular comparisons and characterizations: if a newly scanned item partially deviates from a canonical representation, one can directly compare its raw sensor data with the past real-world instances stored in the database. Such a side-by-side examination can reveal precisely where and how differences occur, providing actionable insights, for example, localizing an internal crack in a battery or identifying an atypical label variant on a product. Because the repository allows direct readout of actual exemplars, it can supply detailed, empirical references for explaining decisions, refining classifications, and/or diagnosing anomalies.

In some examples, the indexed repository 7 is configured to continuously ingest new sensor information from physical objects that reoccur in the material stream, reflecting real-world variability over time. This approach is not limited to merely storing a single "feature vector" or static snapshot of each object type. Instead, it systematically fuses and expands the stored representation whenever the same type of object reappears in different conditions or orientations.

In some examples, an incremental repository 7 is employed. Whenever the same object type reappears on the conveyor or in the material stream, carrying potentially novel information such as different viewpoints, lighting conditions, signs of wear, or partial obstructions, this fresh sensor data can be incorporated into the stored consolidated representation. Over time, the repository learns not just from one set of training examples but from a growing library of real-world encounters.

In some examples, a segmentation is performed for segmenting individual objects in the material stream, prior to said matching step.

In some examples, an object detection is performed for detecting individual objects in the material stream, prior to said matching step. In some examples, acquiring sensor data comprises collecting data from multiple sensing modalities selected from the group consisting of: visible light (RGB), near-infrared, hyperspectral imaging, thermal imaging, X-ray transmission, X-ray fluorescence, laser-induced breakdown spectroscopy, or 3D imaging.

The repository may store consolidated representations of each object type. These representations can incorporate multiple viewpoints and sensing modalities (e.g. optical images, radiographic scans, spectral data, etc.) gathered from real-world observations over time. However, there may be gaps in the coverage of certain viewpoints, especially when objects pass along a conveyor in random orientations or when sensor angles are limited.

By utilizing a generative model (e.g., a variational autoencoder, masked autoencoder, generative adversarial network, or a neural radiance field model adapted for sparse viewpoints), it is possible to gain the ability to synthesize missing views. When only partial angles or incomplete scans are available, the system can use the learned generative model to predict how the object would look from unobserved angles or under different sensor modalities.

In some examples, the existing representations are refined and/or denoised. The model can address sensor noise and partial occlusions or slight object imperfections, creating higher-fidelity representations of the consolidated object type.

In some examples, augmented data may be generated for training. Synthetic novel views can be integrated back into the repository, effectively expanding the training dataset for various tasks (e.g., classification, segmentation, defect detection, regression).

This can effectively result in a more complete, robust, and adaptive indexed repository, particularly in contexts where real data is sparse or where significant variation in orientation/pose occurs.

During the index matching step, each object instance may be embedded into a feature space and compared to existing consolidated representations in the repository. If the object does not confidently match any existing representation, a new entry may be created; otherwise, the instance may be incorporated into the existing object type's aggregated data.

In some examples, a generative module may be employed in the overall pipeline. This module may be configured to learn object representation (training phase). The module can be trained (offline or incrementally) on all available multi-view sensor data gathered for each recognized object type. During training, it may try to learn a latent representation that captures the object's geometry, typical material properties, labeling, and texturing. If an exemplary neural radiance field (NeRF)-type architecture is used, it may learn how to map any virtual viewpoint (e.g. camera angle, X-ray angle) to a predicted sensor reading or projection.

When new data arrives for a recognized object type, if some viewpoints are missing, the generative module may be configured to synthesize the missing images or volumetric slices, effectively estimating/predicting what the sensor would observe if it were placed at that angle.

The model can also refine partial or noisy sensor data by comparing it against the learned latent representation of that object type.

This means each consolidated representation in the repository can be coupled to a trained generative sub-model (or sub-network parameters) capturing that object type's geometry and appearance. Over time, each generative sub-model becomes an increasingly accurate predictor of how the object would look from arbitrary viewpoints.

In some examples, initially, sensor data, obtained by measurements (e.g. using X-ray imaging system, RGB cameras, etc.) captured from physical objects as they are observed in an operational setting (such as a material stream on a conveyor belt), is collected for the same object type under multiple random orientations (e.g., batteries seen from various angles). An initial partial 3D representation or multi-view images/volumes can be built in the repository. Then, for each object type, all the images or X-ray slices may be gathered, and each may be annotated with approximate viewpoint or pose parameters if available. When exact angles are unknown, approximate or learnable orientation estimation techniques can be used. For instance, NeRF style networks can be employed for continuous volumetric rendering. Variational Autoencoders (VAEs),GANs, diffusion models or the like can be used to synthesize missing 2D images, if 3D volumetric reconstructions are not strictly required.

The model may learn to minimize reconstruction error between its predicted images (for known poses) and the real sensor data. For radiographic data, it may learn to predict attenuation patterns at different angles.

As new instances of the same object type appear in the stream, the generative model may be refined. Additional views that were not previously captured are added to that object type's training set, improving its coverage.

If an object type is newly identified and lacks a dedicated generative sub-model, the system can initialize a new sub-model once enough data is collected to begin meaningful generative training.

If the system detects significant coverage gaps (e.g., many angles or vantage points missing) for a known object type, it may invoke the generative sub-model to synthesize those views.

These synthetic views may be validated against any partial data available. If they appear consistent, they may be added to the consolidated representation as augmented data.

In scenarios where sensor data is incomplete or corrupted by noise, the generative module may provide a best guess completion. For example, if only 30% of an object's circumference was visible, the module extrapolates the remaining 70% using learned geometric priors.

For X-ray volumes, the generative model can fill in volumetric slices that were not captured at certain angles, effectively giving a denser 3D reconstruction.

By generating a predicted sensor response, the system can compare it against real sensor data. Large discrepancies may indicate a structural defect (a missing internal component) or external damage.

This generative-based anomaly detection may be more sensitive, because the model knows the normal geometry or appearance from all angles, not just from the ones physically captured.

Traditional multi-view reconstruction may struggle if objects appear at random, unknown orientations. The generative approach learns both geometry and appearance distributions, allowing it to guess unobserved views more reliably than purely analytic methods, in an advantageous way.

With complete or near-complete representations of each object type (thanks to synthesized views), the system can effectively become more confident in matching newly observed object instances, even from unusual angles.

Generating what should be visible from a given viewpoint makes it easier to spot internal or external differences. Subtle damages become evident when the real sensor data departs from the generative prediction by more than a threshold.

In some examples, manufacturers or recycling facilities may have fewer sensors or only partial coverage around a conveyor belt. The generative model compensates for these limitations by filling in the missing data in the repository.

Each time new data is obtained, the generative model can retrain or fine-tune, incrementally improving both the 3D or multi-view reconstructions and the defect detection capabilities.

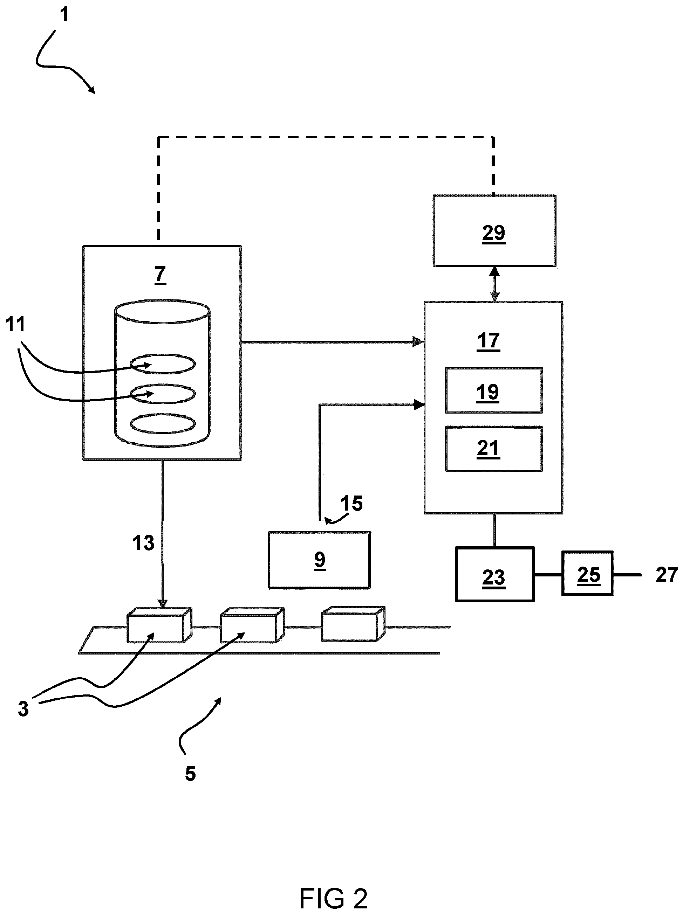

Fig. 2 shows a schematic diagram of an embodiment of a system 1 configured for characterizing objects 3 in a material stream 5 using an indexed repository of recurring object types. The system 1 integrates multiple components that collaboratively function to facilitate identification, analysis, and/or characterization of object instances as they are processed along the material stream 5.

An indexed repository 7 stores consolidated representations 11 of recurring object types. Each consolidated representation 11 can be a synthesized model derived from sensor data collected from multiple instances of the same object type. These representations 11 may encapsulate key features such as geometric shapes, surface textures, material compositions, and other distinguishing characteristics obtained through various sensing modalities 9.

In this example, the material stream 5 represents the physical conveyor or pathway through which object instances 13 move. These objects 3 can be items such as batteries, recyclables, manufactured parts, and/or any materials requiring analysis and classification. As the objects 3 progress along the material stream 5, they encounter the system's sensing infrastructure. One or more imaging units may be used for example. However, other sensing apparatus may also be used.

Positioned adjacent to the material stream 5 are one or more sensing modalities 9. These modalities 9 may include devices like high-resolution cameras, spectrometers, X-ray imaging units, LiDAR sensors, and/or other suitable sensors capable of capturing information about the objects 3. The sensors acquire sensor data 15 of each object instance 13, capturing multiple aspects such as visual appearance, spectral properties, radiographic images, and/or textual or graphical markings present on the object's surface. The collected sensor data 15 is transmitted to a data processing unit 17.

Within this unit 17, a feature extraction module 19 may be provided that is configured to process raw sensor data to extract meaningful features and/or representations. These features/representations may represent the object instance for example in a reduced and computationally efficient form. Techniques such as image processing algorithms, neural networks, and/or other machine learning models may be employed to generate feature vectors or embeddings that capture the essence of the object's characteristics. This may facilitate the comparison/matching step.

The data processing unit 17 further includes a matching engine 21 that is configured to utilize the extracted features from the feature extraction module 19 to compares the object instance against the consolidated representations 11 stored in the indexed repository 7. This comparison may involve computing similarity measures, which may be performed in a learned embedding space where semantically similar objects are located near each other. Machine learning models trained on historical sensor data can facilitate this matching process.

Upon identifying a match, the system 1 may be configured to proceed to a characterization module 23. The object instance 13 may thus be analyzed in the context of the matched consolidated representation 11.

In some examples, the characterization may involve classification, in which the object type and/or category is determined based on predefined classes in the repository.

In some examples, the characterization may involve defect detection, in which anomalies and/or deviations from the standard consolidated representation are identified, which can indicate defects, wear, damages, etc.

In some examples, the characterization may involve property estimation, in which geometrical dimensions, material composition, or any one or more other physical properties are inferred.

For instance, if the object is a battery, the system may determine the battery type or chemistry by referencing characteristic optical patterns, spectral signatures, radiographic profiles, and/or textual information encoded in the consolidated representation.

The results from the characterization module 23 can be passed to an output generator 25. This component may be configured to format and deliver the output 27, which reflects the outcome of the characterization. The output can be in the form of digital signals sent to control systems, visual displays for operators, and/or data logs for further processing. It may include notifications of detected defects, sorting instructions, inventory updates, or other actionable information.

In some examples, an optional update module 29 is provided that is configured to perform incremental updating of the consolidated representations in the indexed repository 7. When new object instances are processed and identified as existing object types, their sensor data can be integrated to refine the consolidated representations. This continuous learning approach ensures that the repository adapts over time, improving accuracy in matching and characterization as more data becomes available.

In some examples, the system 1 supports the integration of multi-view data acquisition. The sensing modalities 9 may include multiple sensors positioned at different angles or locations relative to the material stream 5, allowing for the collection of diverse data perspectives of the same object instance. This multi-view approach enhances the richness of the sensor data 15, facilitating more robust feature extraction and accurate characterization, by providing ground-truth data without requiring human input.

In some examples, in cases where objects have curved or cylindrical surfaces, such as bottles or cylindrical batteries, the system can generate an unfolded or unwrapped representation. This may for example involve transforming the surface data into a flat or quasi-plane, making it easier to analyze the contents on the object.

In some examples, the system 1 may include capabilities for simulated sensor response generation. By utilizing the consolidated representation 11, the system may predict what the sensor data should look like from a specific viewpoint. Comparing this simulated response with the actual sensor data 15 allows for precise detection of anomalies or defects based on differences exceeding a certain threshold.

In some examples, the material stream is a waste or recycling stream comprising multiple recurring product types, and the indexed dictionary is used to track material flows, estimate volumes of specific product types, and facilitate downstream recycling or sorting processes.

In some examples, the method analyzes material characteristics of the object, which can include chemical composition, internal material states (e.g., crystallinity), or other relevant physical properties. By incorporating data from radiographic, hyperspectral, or other specialized sensors, the consolidated representations can store important material-level signatures that aid in differentiating objects that appear visually similar but differ in substance or internal structure.

In some examples, a generative model is used to construct or refine the representations of the object. The generative model can fill in missing parts of an image, estimate unseen views, or even create 3D reconstructions from incomplete data, especially beneficial in scenarios where only sparse or occluded sensor readings are available. Such generative capabilities add robustness to the consolidated representations, allowing the system to handle ambiguous or partially observed objects more effectively.

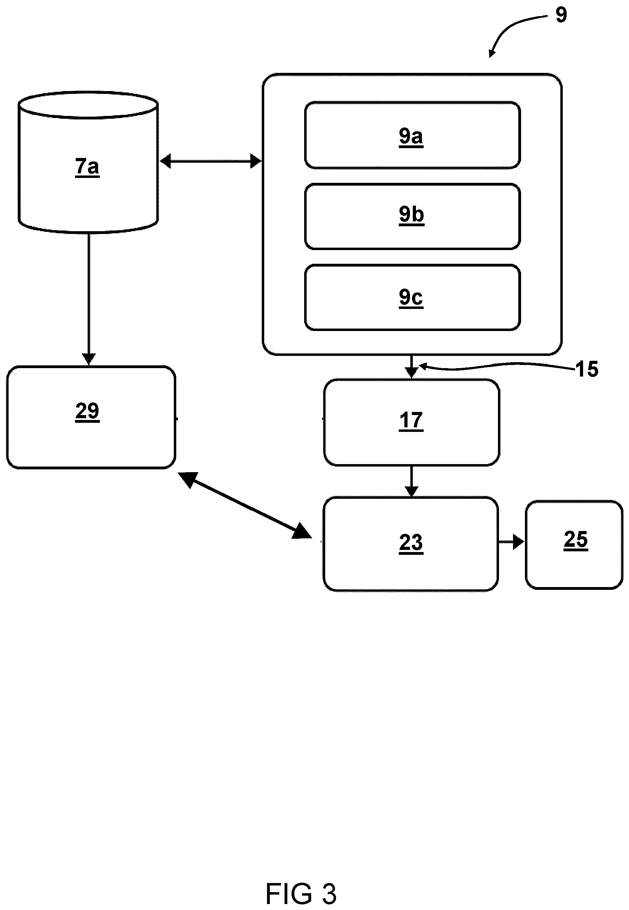

Fig. 3 shows a schematic diagram of an embodiment of a system 1. In this exemplary embodiment, the system 1 is tailored for the characterization of batteries within a material stream. Such system 1 may for instance extend the shown architecture depicted in figs. 1 or 2, incorporating specific components and processes configured to handle the unique challenges associated with identifying, analyzing, and categorizing various battery types. It will be appreciated that this is just an exemplary application, but that the method and system of the disclosure may be used for various other material streams.

An indexed battery repository 7a, which stores an extensive collection of battery consolidated representations 11a is provided. Each consolidated representation 11a can be a synthesized model generated from sensor data collected across multiple instances of a particular battery type. These representations can encapsulate important features such as geometric dimensions, surface textures, material compositions, internal structures, and/or distinguishing markings obtained through at least one sensing modality.

In this example, the battery material stream represents the physical conveyor or pathway along which individual battery instances are transported. These battery instances can vary widely, including different sizes, chemistries, and manufacturers, including alkaline, lithium-ion, nickel-metal hydride, lead-acid batteries, etc. As the batteries progress along the material stream, they enter the system's sensing environment.

In some examples, multiple sensing modalities 9 are arranged proximate the battery material stream. These modalities may be configured to capture comprehensive data from each battery instance using various technologies. In this example, the system 1 includes a high-resolution optical camera 9a that is configured to capture visual images of the battery's exterior, including color, surface markings, text, and physical defects. Furthermore, in this example, a spectroscopic sensors 9b is arranged that is configured to utilize techniques such as Raman spectroscopy or hyperspectral imaging to determine the chemical composition of the battery's casing and, where possible, its internal components. Furthermore, in this example, an X-ray imaging system 9c is provided that is configured to acquire radiographic images revealing internal structures, chemical composition, electrode configurations, and potential internal defects or anomalies. For instance, the chemical composition may be determined based on multi-energy (spectral) x-ray imaging.

In some examples, the system 1 integrates spectral X-ray transmission images acquired from multiple viewpoints to construct a three-dimensional reconstruction of an object. By combining diverse perspectives, the system 1 can overcome the inherent limitations of single-view X-ray imaging, which is unable to capture the complete spectral and spatial information of the object. The resulting 3D model enables the extraction of distinct spectral fingerprints corresponding to individual components and materials, providing relevant insights into their chemical composition with improved accuracy. This multi-angle spectral analysis not only enhances material discrimination but also facilitates robust determination of composition by correlating variances in X-ray attenuation across the reconstructed volume.

It will be appreciated that various other sensing modalities may be used, such as for example three-dimensional scanners (not shown) that employ methods like structured light or laser scanning to create precise 3D models of the battery's external geometry, capturing dimensions and shape features.

The data captured by these sensing modalities constitute the acquired sensor data 15 for each battery instance. This data is transmitted to the data processing unit 17, which, in this example may orchestrate several computational processes. It may include a data fusion module that is configured to integrates sensor data from the various modalities to form a cohesive representation of each battery instance. By aligning and combining data from optical, spectral, radiographic, and geometric scans, the system 1 may ensure that all available information contributes to the analysis.

The data processing unit 17 may further include a feature extraction module that is configured to process the fused data to extract salient features that characterize the battery. This may for example involve at least one of spectral feature analysis that interprets spectral signatures to infer material properties indicative of specific battery chemistries; radiographic feature analysis that detecting internal configurations, chemical composition, and potential defects by analyzing X-ray images, geometric analysis in which dimensions, volumes, and shape descriptors from the 3D models are computed, or graphics recognition that utilizes optical recognition and/or pattern recognition algorithms to identify text, logos, and other markings on the battery's surface.

In some examples, an embedding and similarity computation module is provided that is configured to convert the extracted features into a high-dimensional embedding space using machine learning algorithms trained on a comprehensive dataset of battery types. In this embedding space, similar batteries are located near each other, facilitating efficient similarity computations.

A matching engine (e.g. a vector database) may compare the battery instance's embedded representation against those stored in the indexed battery repository 7a. The matching process may for example involve similarity metrics calculation, in which distances or similarity scores between the battery instance and each consolidated representation are computed.

Furthermore, the matching process may for example involve a threshold evaluation in which predefined thresholds are applied to determine acceptable matches, ensuring reliability in identification.

Upon successfully matching the battery instance to a consolidated representation, the system may advance to the battery characterization module 23. Here, the battery instance is analyzed in detail by leveraging the information encapsulated in the matched consolidated representation 11a. The characterization process may for example include type and chemistry identification in which the specific battery type (e.g., AA, AAA, CR2032) and its chemistry (e.g., lithium-ion, alkaline, nickel-metal hydride) are identified by referencing characteristic features stored in the consolidated representation. Furthermore, additionally or alternatively, in some examples, the characterization process may involve defect and anomaly detection in which deviations from the standard representation are identified that may indicate manufacturing defects, damage, or wear. This may for example involve, in some examples, simulated sensor response generation in which expected sensor readings are predicted based on the consolidated representation and comparing them with actual sensor data to detect discrepancies. In some examples, it may involve threshold-based discrepancy analysis in which differences are quantified, wherein those that exceed acceptable limits are flagged, indicating potential defects.

In some examples, textual and graphical information is incorporated, extracting and utilizing text and graphics from the battery's surface to aid in classification and verification processes.

In some examples, additionally, for batteries with cylindrical or curved surfaces, the system employs an unwrapping module that is configured to transforms the internal curved structure of the battery into a flat, two-dimensional representation, facilitating easier characterization of features and properties.

The results of the characterization process may be forwarded to the output generation unit 25, which may be configured to prepare the characterization output. This output may for example include classification results including information about the battery's type, chemistry, manufacturer, and model; defect reports that details of any detected anomalies, including their nature and severity; handling instructions that provide for example recommendations/commands for sorting, recycling, or disposal based on the battery's characteristics and compliance requirements.

In some examples, the characterization output is made available for integration with external systems, such as automated sorting machinery, inventory management software, etc.

In some examples, an integral component of the system is an incremental learning and repository update module 29. This module 29 may be configured to ensure that the indexed battery repository 7a remains current and comprehensive.

In some examples, repository refinement is performed in which consolidated representations are updated with new sensor data from recently analyzed battery instances, enhancing the accuracy of future matches.

In some examples, new battery type integration is performed in which entirely new battery types are incorporated into the repository when they are encountered, expanding the system's recognition capabilities.

In some examples, machine learning model retraining is performed involving periodically retraining embedding and classification models using an expanded dataset to improve performance over time.

In some examples, for instance in scenarios where batteries are part of a larger assembly or encased within packaging, the system may perform hierarchical analysis in which individual battery instances within the assembly are identified and isolated for independent characterization. Optionally, sensing parameters are adjusted to account for intervening materials, ensuring accurate data acquisition.

In some examples, the entire process is managed by a control and coordination unit (not shown), which oversees system operations. It may be configured to coordinate the activities of sensing modalities, data processing modules, and output generation to ensure seamless operation. It may also for example track performance metrics, sensor statuses, and data integrity, providing alerts in case of malfunctions or anomalies. In some examples, a user interface is provided that offers interfaces for system administrators to configure settings, review results, and initiate manual interventions if necessary.

In some examples, the objects are end-of-life batteries, and the system is configured to determine state-of-health for each battery based on internal structural features visible in the unified 3D X-ray-based representation, including detecting charge levels, damage, or chemical anomalies.

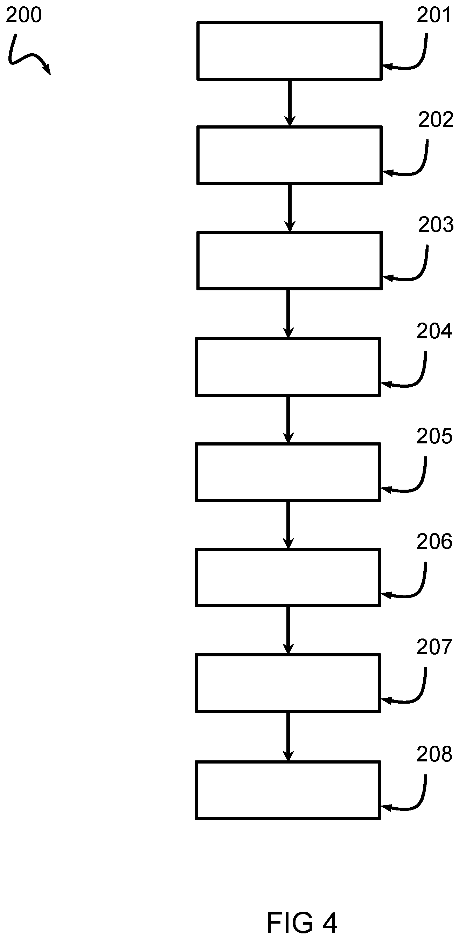

Fig. 4 shows a schematic diagram of a method 200 for characterizing objects in a material stream using an indexed repository of recurring object types. Advantageously, by continued learning, combining and exploiting the data of multiple instances of the same objects, the consolidated representations are enriched over time, significantly surpassing the information contained in the data of a single instance.

In step 201, an indexed repository is initialized and provided. The indexed repository stores consolidated representations of recurring object types. Each consolidated representation is derived from sensor data collected from multiple instances of an object type, ensuring that it encapsulates the typical characteristics of that object type.

The repository may be structured as a database (e.g. vector database) or data structure that allows for efficient storage and retrieval. It may index the consolidated representations based on relevant identifiers, such as object type labels, feature vectors, or hash values generated from characteristic data. The representations can include various data forms, such as three-dimensional (3D) models, spectral signatures, radiographic profiles, and/or any other information extracted and/or derived from object surfaces.

In step 202, sensor data of object instances can be acquired of object instances in the material stream. This may involve using one or more sensing modalities to collect data as objects move along the stream. The sensing modalities can include optical cameras (visible, infrared, ultraviolet), X-ray imaging systems, hyperspectral imaging devices, LiDAR, and any other sensors capable of capturing relevant object features/properties.

Sensor data acquisition may be aligned with the movement of the material stream to ensure that data corresponding to each object instance is properly segmented and associated, allowing accurate alignment and fusing of the multi-sensor data. Techniques such as triggering sensors based on object detection or using fixed frame rates can be employed to achieve accurate data capture.

In step 203, sensor data may be preprocessed and segmented. Once the raw sensor data is acquired, it may undergo preprocessing and/or segmentation. Preprocessing steps may include background cancellation, noise reduction, normalization, alignment and calibration to account for sensor-specific characteristics and environmental conditions. Segmentation may involve identifying individual object instances within the sensor data, separating them from the background and from each other.

Image processing algorithms, such as thresholding, edge detection, and other analysis, can be used for segmentation in images. For 3D data or volumetric images (e.g., from X-ray CT scans), voxel-based segmentation methods may be applied for instance.

In step 204, representation of acquired sensor data are generated for each identified object instance. This representation can be formulated in a manner that facilitates comparison with the consolidated representations in the repository. Depending on the type of sensor data and the object characteristics, the representation may include feature vectors, embeddings, 3D models, and/or other descriptive formats.

Machine learning models, such as convolutional neural networks (CNNs), transformers, autoencoders, or other feature extraction algorithms, can be employed to generate robust and discriminative representations. These models may be pre-trained on relevant datasets to ensure that they capture the pertinent features necessary for accurate matching.

In step 205, the generated representation of the object instance can be compared to the data associated with the stored consolidated representations to perform a matching process. This matching may involve computing similarity measures, such as Euclidean distance, cosine similarity, or other metrics in a learned embedding space.

A machine learning model trained to project sensor data into an embedding space can be used, where similar objects are located near each other. K-nearest neighbors, clustering algorithms, indexing structures like KD-trees or locality-sensitive hashing (LSH), graph-based methods, quantization-based methods or hybrid methods can facilitate efficient retrieval of the closest matching consolidated representation.

In step 206, the system may evaluate the confidence level of the match. The confidence level may be determined based on the similarity measure computed in the previous step. A threshold can be set to distinguish between high-confidence matches and uncertain cases.

If the confidence level is above the threshold, the system may proceed to characterize the object instance using the matched consolidated representation. If the confidence level is below the threshold, alternative actions may be taken, such as flagging the object instance for manual review or attempting to create a new consolidated representation.

In step 207, with a high-confidence match, the system may perform a characterization of the object instance by referencing the matched consolidated representation. Characterization can include for instance: identifying the specific type or class of the object, such as a particular battery model, packaging type, and/or component; comparing the object instance to the consolidated representation to identify discrepancies that may indicate damage, wear, and/or manufacturing defects; Extracting measurements, such as dimensions and shapes, and/or inferring material properties based on known attributes of the object type; recognizing and interpreting text or graphics on the object's surface, which may provide serial numbers, usage instructions, and/or branding; in-depth (spectral) analysis of the 3D (x-ray) reconstruction of the object, e.g. its components and their chemical composition; and/or other types of characterizations.

In some examples, for applications involving anomaly or defect detection, the system may simulate a predicted sensor response of the matched consolidated representation from the same viewpoint as the newly acquired sensor data. This simulation may generate an expected sensor output if the object instance were to perfectly match the consolidated representation.

Techniques such as rendering 3D models, generating synthetic images, or applying physical simulation models can produce the predicted sensor response. This allows for a direct comparison with the actual sensor data.

In some examples, the system compares the predicted sensor response to the actual sensor data to identify differences. Discrepancies above a predefined threshold indicate potential anomalies or defects. Image subtraction, difference mapping, or statistical analysis can quantify the differences and localize areas of concern on the object instance.

In some examples, the system may incrementally update the consolidated representation in the indexed repository by incorporating newly acquired sensor data from the current object instance. This step ensures that the consolidated representation remains accurate and reflects variations that occur over time.

In step 208, the system generates an output reflecting the result of the characterization. The output may include highlighting detected anomalies on images and/or 3D models; object classifications, measurements, and/or detected issues; triggering actions in response to the characterization, such as sorting objects, halting the material stream, and/or initiating further inspections.

The output may be formatted according to the requirements of downstream processes or user interfaces and may be stored, transmitted, or displayed in real-time.

It will be appreciated that the described method is applicable across various industries, including recycling, manufacturing quality control, security scanning, and materials sorting.

In some examples, the material stream comprises waste objects or end-of-life products, the method further comprising classifying said objects into at least one of multiple handling or recycling pathways based on the characterization obtained from the matched consolidated representations.

In some examples, the method further includes conveying the material stream on a transport belt, wherein said one or more sensing modalities are arranged above or around the transport belt to capture data from objects as they move along the belt.

In some examples, a mechanical actuator or agitator configured to perturb or reorient objects on the transport belt, enabling acquisition of multiple orientations or viewpoints of each object instance.

In some examples, the mechanical actuator or agitator is controlled to selectively adjust the position, orientation, or speed of objects on the transport belt in response to a detection that additional viewpoints are needed to complete or refine a consolidated representation.

In some examples, the method further includes controlling the transport belt speed or dwell time under each sensor to improve data acquisition for objects that have been flagged as requiring further viewpoints to complete or refine their consolidated representation.

In some examples, the method further comprises arranging at least two sensors at different positions and/or angles relative to the transport belt, so that each object instance in the material stream is observed from multiple viewpoints within a single pass.

In some examples, the at least two sensors include an X-ray transmitter-detector arrangement and a visible-light camera oriented at an offset angle with respect to the transport belt, so as to capture both radiographic data and optical data of the same object instance.

In some examples, the at least two sensors are of identical type, enabling to generate ground truth data for training object/instance similarity models without the need for costly human labeling.

In some examples, the method further includes segmenting the acquired sensor data to identify discrete objects in the material stream prior to matching each segmented object instance to at least one consolidated representation.

In some examples, the method further comprises generating an unfolded or unwrapped two-dimensional representation of a curved or cylindrical surface of the object instance using data captured from multiple orientations, wherein the unfolded surface representation is stored in association with the consolidated representation for text recognition or inspection.

In some examples, the method further includes reading textual or coded information (using OCR, VLMs or other text-extraction techniques) on a surface of each object instance as it moves along the transport belt, automatically associating said textual or coded information with the corresponding matched consolidated representation, and using said textual or coded information to refine or confirm the object classification in the indexed repository.

It will be appreciated that the method may include computer implemented steps. All above mentioned steps can be computer implemented steps. Embodiments may comprise computer apparatus, wherein processes are performed in computer apparatus. The invention also extends to computer programs, particularly computer programs on or in a carrier, adapted for putting the invention into practice. The program may be in the form of source or object code or in any other form suitable for use in the implementation of the processes according to the invention. The carrier may be any entity or device capable of carrying the program. For example, the carrier may comprise a storage medium, such as a ROM, for example a semiconductor ROM or hard disk. Further, the carrier may be a transmissible carrier such as an electrical or optical signal which may be conveyed via electrical or optical cable or by radio or other means, e.g. via the internet or cloud.

Some embodiments may be implemented, for example, using a machine or tangible computer-readable medium or article which may store an instruction or a set of instructions that, if executed by a machine, may cause the machine to perform a method and/or operations in accordance with the embodiments.

Various embodiments may be implemented using hardware elements, software elements, or a combination of both. Examples of hardware elements may include processors, microprocessors, circuits, application specific integrated circuits (ASIC), programmable logic devices (PLD), digital signal processors (DSP), field programmable gate array (FPGA), logic gates, registers, semiconductor device, microchips, chip sets, et cetera. Examples of software may include software components, programs, applications, computer programs, application programs, system programs, machine programs, operating system software, mobile apps, middleware, firmware, software modules, routines, subroutines, functions, computer implemented methods, procedures, software interfaces, application program interfaces (API), methods, instruction sets, computing code, computer code, et cetera.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The term "and/or" includes any and all combinations of one or more of the associated listed items. The mere fact that certain measures are recited in mutually different claims does not indicate that a combination of these measures cannot be used to an advantage.

## Claims

1. A method for characterizing objects in a material stream by using an indexed repository of recurring object types, the method comprising:
providing an indexed repository that stores consolidated representations of recurring object types, each consolidated representation having been derived from sensor data collected from multiple instances of an object type;
acquiring sensor data of at least one object instance in the material stream, using one or more sensing modalities;
matching said object instance to at least one consolidated representation within the indexed repository, based on a comparison of a representation of the acquired sensor data of said object instance to data associated with the stored consolidated representations;
performing a characterization of the object instance by referencing the matched consolidated representation; and
generating an output reflecting a result of the characterization.

2. The method of claim 1, wherein the characterization includes at least one of: determining an object type or classification, detecting anomalies or defects by comparing the object instance to the consolidated representation, or estimating geometrical and/or material characteristics.

3. The method of claim 1 or 2, wherein each consolidated representation stored in the indexed repository includes a three-dimensional model of the corresponding object type, the three-dimensional model being generated from multi-view sensor data of multiple instances of said object type.

4. The method of claim 3, further comprising applying a three-dimensional reconstruction technique to produce or refine said three-dimensional model from sparse or partially overlapping two-dimensional images acquired under varying orientations of the object instances.

5. The method of any one of the preceding claims, further comprising incrementally updating at least one consolidated representation in the indexed repository, by incorporating newly acquired sensor data from subsequent object instances identified as the same object type during analyzing of objects in the material stream.

6. The method of any one of the preceding claims, wherein the matching of the object instance to at least one consolidated representation comprises computing a similarity measure in a learned embedding space, said embedding space being generated via a machine learning model trained on the sensor data.

7. The method of any one of the preceding claims 2-6, wherein detecting anomalies or defects further comprises:
simulating a predicted sensor response of the matched consolidated representation from the same viewpoint as newly acquired sensor data, and
comparing the predicted sensor response to the actual sensor data to identify differences above a threshold, said differences indicating an anomaly or defect.

8. The method of any one of the preceding claims, further comprising extracting textual or graphical information appearing on the surface of the object instance, and incorporating said textual or graphical information into the consolidated representation for subsequent recognition and/or classification tasks.

9. The method of any one of the preceding claims, wherein the object instance is a battery, and the step of performing the analysis includes determining a battery type or battery chemistry by referencing the matched consolidated representation that encodes characteristic optical, spectral, radiographic, and/or textual features indicative of battery composition.

10. The method of any one of the preceding claims, further comprising generating an unfolded or unwrapped representation of a cylindrical or otherwise curved surface of the object instance, wherein said unwrapped representation is stored in association with and/or can be derived from the consolidated representation in the indexed repository for recognition or inspection.

11. The method of any one of the preceding claims, further comprising incorporating multi-view data acquired of the same instance by at least two sensors oriented at different angles or positions relative to the material stream.

12. The method of any one of the preceding claims, wherein the three-dimensional model of the matched consolidated representation includes voxel-level radiographic data, and further comprising analyzing per-voxel X-ray absorption characteristics to characterize, identify and/or discriminate among multiple constituent materials within the object instance.

13. A system for characterizing objects in a material stream by using an indexed repository of recurring object types, the system comprising at least one processor, a memory operatively coupled to the at least one processor, and program instructions stored in the memory which, when executed by the at least one processor, cause the system to:
provide an indexed repository that stores consolidated representations of recurring object types, each consolidated representation having been derived from sensor data collected from multiple instances of an object type;
acquire sensor data of at least one object instance in the material stream, using one or more sensing modalities;
match said object instance to at least one consolidated representation within the indexed repository, based on a comparison of a representation of the acquired sensor data of said object instance to data associated with the stored consolidated representations;
perform a characterization of the object instance by referencing the matched consolidated representation; and
generate an output reflecting a result of the characterization.

14. A method of building an indexed representation of recurring objects in a physical material stream, the method comprising:
acquiring sensor data from a stream containing multiple object instances, said sensor data being obtained by one or more sensing modalities;
identifying object instances in the acquired sensor data, each object instance corresponding to a distinct physical object;
generating feature representations of the identified object instances through a learning process configured to produce similar feature representations for repeated appearances of the same object;
grouping or clustering the object instances that share sufficiently similar feature representations, in order to recognize a recurring object type;
forming a consolidated representation of each recurring object type by combining or otherwise fusing the sensor data from the grouped object instances; and
storing the consolidated representation in an indexed repository to enable retrieval, comparison, and/or further analysis of subsequently observed object instances.

15. A non-transitory computer-readable medium storing computer-executable instructions that, when executed by one or more processors, cause the one or more processors to perform the method of claims 1-12 or the method of claim 14.
